# EUROPÄISCHE PATENTSCHRIFT

(11) **EP 2 357 066 B1**
(45) Veröffentlichungstag und Bekanntmachung des Hinweises auf die Patenterteilung: **22.06.2016**
(21) Anmeldenummer: 11150211.8
(22) Anmeldetag: 05.01.2011
(51) Int. Cl.: B29B 17/00, B29C 45/18, B29C 49/06, B29K 67/00, B29K 105/26, B01J 19/00, B29B 9/16, B29B 13/02, B29C 31/04, C08G 63/80, C08G 63/90, C08J 11/06

(54) **ANLAGE ZUM HERSTELLEN VON BEHÄLTER-PREFORMS**
DEVICE FOR MANUFACTURING CONTAINER PREFORMS
INSTALLATION DE FABRICATION DE PRÉFORMES DE RÉCIPIENTS

(30) Priorität: 17.02.2010 DE 102010002054
(43) Veröffentlichungstag der Anmeldung: 17.08.2011
(73) Patentinhaber: Krones AG, 93073 Neutraubling (DE)
(72) Erfinder: Humele, Heinz, 93107, Thalmassing (DE); Senn, Dipl.-Phys. Konrad, 93059, Regensburg (DE)
(74) Vertreter: Grünecker Patent- und Rechtsanwälte PartG mbB

(56) Entgegenhaltungen:
- WO-A1-2006/133469
- DE-A1- 10 333 648
- DE-A1- 19 953 659
- DE-A1-102005 013 701
- JP-A- 2002 309 032
- US-A- 4 392 804
- US-B1- 6 703 479

## Beschreibung

Die Erfindung betrifft eine Anlage gemäß Oberbegriff des Patentanspruchs 1.

Die Herstellung von Behälter-Preforms aus recyceltem Kunststoffmaterial, insbesondere PET-Flakes, bedingt ein sehr wärmeintensives Verfahren. Außerdem erfordert die Bereitstellung recycelten Kunststoffmaterials, insbesondere PET-Flakes, enorme Wärmezufuhr, um das Kunststoffmaterial zu dekontaminieren und gegebenenfalls eine SSP-Behandlung zur Aufbereitung durchzuführen. Die SSP-Behandlung ist ein Standardprozess, der auf dem Gebiet der PET-Kunststofftechnik bekannt ist und bedeutet, dass eine Molekülkettenbeeinflussung (Verlängerung, Verkürzung oder Aufrechthaltung) vorgenommen wird (solid state polycondensation), d.h. eine Wärmebehandlung über eine vorbestimmte Zeitdauer. Die Dekontamination und die SSP-Behandlung können in einer Recyclingmaschine in einem Reaktor oder in getrennten Reaktoren ausgeführt werden, wie dies in DE 10 2005 013 701 A1 offenbart wird. Die Dekontamination wird z.B. mit heißem Gas, beispielsweise Luft oder Stickstoff, durchgeführt, wobei Wärme über unterschiedliche Wärmeträgermedien zugeführt wird, bis beispielsweise Temperaturen zwischen 100°C und 180°C erreicht werden. Die SSP-Behandlung wird z.B. unter Unterdruckbedingungen durchgeführt, wobei Temperaturen bis höchstens zur Schmelztemperatur des Kunststoffmaterials von 150°C bis 250°C, bevorzugt zwischen 170°C und 210°C eingestellt werden. Die SSP-Behandlung kann in einer Inertgasatmosphäre ablaufen, z.B. unter Verwendung von Stickstoff oder Kohlendioxid. In der aus DE 10 2005 013 701 A1 bekannten Recyclingmaschine wird das recycelte Kunststoffmaterial nach der SSP-Behandlung in einem Kühlreaktor auf eine Temperatur zwischen 50°C und 100°C abgekühlt, vorzugsweise sogar auf weniger als 70°C, d.h. auf eine Temperatur unterhalb des Glasumwandlungspunktes des Kunststoffmaterials. Zur Abkühlung kann eine Kühlschnecke, ein Vibrationswendelförderer oder ein Wirbelschichtreaktor oder eine andere Kühlvorrichtung verwendet werden, beispielsweise durch Zufuhr von Umgebungsluft. Obwohl zumindest die SSP-Behandlung chargenweise durchgeführt werden, kann durch eine mehrteilige SSP-Reaktoranordnung ein quasi kontinuierlicher Ausstoß an recyceltem Kunststoffmaterial erzielt werden. Das auf unter 65°C abgekühlte recycelte Kunststoffmaterial wird dann einer Preformmaschine zugeführt, oder gegebenenfalls zuvor vollständig auf Raumtemperatur abgekühlt. In der Preformmaschine muss das recycelte Kunststoffmaterial dann wieder erwärmt werden, um die Preforms herstellen zu können.

In WO 2006/133469 A werden bei unterschiedlichen Verfahrensvarianten jeweils Kühler eingesetzt, in welchen aus dem Reaktionsbehälter abgegebenes Polyestermaterial auf eine erste Kühltemperatur unter der Reaktionstemperatur abgekühlt wird, d.h. auf mindestens etwa 160°C oder weniger. Als Grund für diese Abkühlung wird angegeben, dass eine durch die vorhergehende Reaktion gestartete Viskositätsänderung gestoppt werden soll. Der Reaktor ist mit dem Extruder nicht verblockt, sondern zwischen diesen Anlagensektionen erstreckt sich eine Rohrleitung, in welcher das transferierte Polyestermaterial weiter abkühlt. Der nachgeschaltete Extruder kann mit einem Granulierer zum Herstellen von Pellets eingesetzt werden, die später beispielsweise zum Spritzgießen von Preforms verwendet werden.

Bei einem aus DE 199 53 659 A bekannten Verfahren werden geschmolzene Polykondensate in einen Extruder eingeführt. Dieser Extruder entfernt nicht schmelzende Substanzen über einen Schmelzefilter und/oder dient zum Herstellen eines Granulats, sofern er mit einem Granulierer kombiniert ist.

Bei einem aus US 4 392 804 A bekannten Verfahren ist in einer Zuführleitung zu einem Extruder einer Spritzgießeinheit mit Spritzgießformen ein Reaktor zugeordnet. Zwischen dem Reaktor und der Spritzgießmaschine liegt eine kühlende Unterbrechung vor.

Bei einem aus US 6 703 479 B bekannten Verfahren wird behandeltes Kunststoffmaterial über eine kühlende Abführeinrichtung beispielsweise in einen Speicher transferiert.

Bei einer aus JP 2002-309032 A bekannten Anlage ist zwischen einer Reaktoranordnung und einem Einlass eines Extruders eine langgestreckte kühlende Verbindung offenbart.

Bei einem aus DE 103 33 648 A bekannten Verfahren wird hinter einem Nachtrockner ein Heißlufterzeuger angeordnet, wobei nachgetrocknetes, einen Silo verlassendes Gut beispielsweise einem Extruder aufgegeben werden kann. Dieser Extruder ist Teil einer Granulieranlage, vorzugsweise einer Unterwasser-Granulieranlage, mit der als Endprodukt ein trockenes und kühles Granulat erzeugt wird.

Der Erfindung liegt die Aufgabe zugrunde, eine Anlage zum Herstellen von Behälter-Preforms aus recyceltem Kunststoffmaterial anzugeben, die eine verbesserte Wärmebilanz im Hinblick auf erhebliche Einsparung von Primär-Wärmeenergie ermöglicht.

Die gestellte Aufgabe wird mit den Merkmalen des Patentanspruchs 1 gelöst.

In der Anlage wird durch die direkte Verblockung der Recyclingmaschine mit der Preformmaschine sichergestellt, dass das recycelte Kunststoffmaterial nicht mehr zwangsgekühlt werden muss, sondern so in die Preformmaschine überführt wird, dass zumindest ein Großteil der bei der Wärmebehandlung des Kunststoffmaterials in der Recyclingmaschine eingebrachten Wärme in die Preformmaschine transferiert wird. Dadurch verringert sich der Wärmebedarf der Preformmaschine, und wird vorrichtungstechnisch der Vorteil erzielt, eine Kühleinheit zum Zwangskühlen des recycelten Kunststoffmaterials weglassen zu können. Da zumindest ein Großteil der verfahrensbedingt zur Bereitstellung des recycelten Kunststoffmaterials eingebrachten und gespeicherten Wärme in die Preformmaschine transferiert wird, kann die Wärmeenergiebilanz bei der Herstellung von Behälter-Preforms aus recyceltem Kunststoffmaterial erheblich verbessert werden, flankierend unterstützt durch den Entfall des Zeitaufwandes und des Energiebedarfes zur Abkühlung des recycelten Kunststoffmaterials vor dessen Überführung in die Preformmaschine. Die Recyclingmaschine umfasst wenigstens einen Dekontaminationsreaktor und/oder wenigstens einen SSP-Reaktor. Um einen quasi kontinuierlichen Ausstoß an recyceltem Kunststoffmaterial zu erzielen, können mehrere alternierend und/oder überlappend oder in Kombination betriebene Dekontaminations- und SSP-Reaktoren vorgesehen sein. Ferner können mehrere Preformmaschinen gleichzeitig oder alternierend aus der Recyclingmaschine mit noch heißem recyceltem Kunststoffmaterial gespeist werden. Die Verblockung kann wärmeisoliert sein und/oder so ausgebildet werden, dass die Überführung des recycelten Kunststoffmaterials in zumindest weitestgehender Abwesenheit von Sauerstoff stattfindet. Die Abwesenheit von Sauerstoff ermöglicht es, die Überführung mit einem möglichst großen Anteil der in der Recyclingmaschine eingebrachten Wärme durchzuführen, ohne die Verarbeitungsqualität des heissen Kunststoffmaterials durch die Überführung zu gefährden. Im Hinblick auf eine günstige Wärmeenergiebilanz ist die Preformmaschine direkt, vorzugsweise über eine Preform-Wärmebehandlungsstrecke zum Einstellen eines bestimmten Temperaturprofils in jedem Preform, mit einer Blasmaschine verblockt. Auf diese Weise lässt sich auch Wärme aus der Preformmaschine in die Wärmebehandlungsstrecke oder direkt in die Blasmaschine transferieren.

Bei einer zweckmäßigen Anlagenvariante kann die Verblockung sogar an eine Wärmezufuhr angeschlossen sein, die zur Erhöhung oder Einhaltung der Temperatur des Kunststoffmaterials bei der Überführung beiträgt, und gegebenenfalls von Wärmezuführungseinrichtungen der Recyclingmaschine und/oder der Preformmaschine mitgespeist wird.

Günstig ist es ferner, zwischen der Preformmaschine und der Recyclingmaschine eine Rückführeinrichtung für fehlerhaften Preformausstoß vorzusehen. Der fehlerhafte Preformausstoß lässt sich auf diese Weise direkt in die Recyclingmaschine zurückführen, ohne zwischengespeichert, abgekühlt und später wieder aufgewärmt werden zu müssen.

Auch kann zweckmäßig zwischen der Blasmaschine und der Recyclingmaschine eine Rückführeinrichtung für Abfallmaterial und/oder fehlerhaften Behälterausstoß vorgesehen sein, so dass das Abfallmaterial bzw. der fehlerhafte Behälterausstoß nicht gesondert gespeichert, abgekühlt und entweder verworfen oder auf andere Weise wiederverwertet zu werden braucht. Die Rückführeinrichtungen vermeiden insgesamt eine Vergeudung von Kunststoffmaterial.

Anhand der Zeichnung werden Ausführungsformen des Erfindungsgegenstandes erläutert.

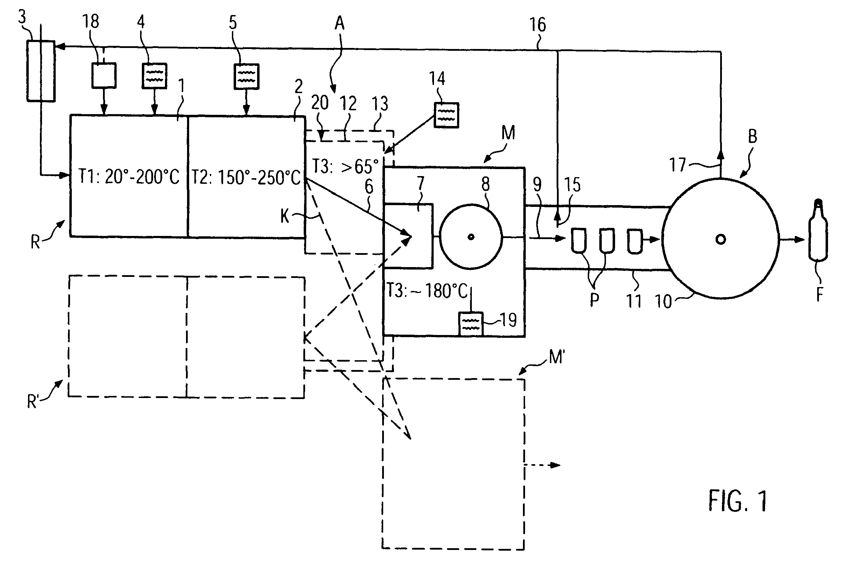

Fig. 1 ist eine Schemadarstellung einer Anlage A zum Herstellen von Behälter-Preforms P, als Option in direkter Verblockung mit einer Blasmaschine B zum Herstellen geblasener oder streckgeblasener Kunststoff-Hohlbehälter, insbesondere PET-Flaschen F, insbesondere PET-Flakes, und zwar z.B. in einem kontinuierlichen Verfahrensablauf.

Die Anlage A zum Herstellen von Behälter-Preforms P in Fig. 1 besteht im Grundzug aus einer Recyclingmaschine R für recyceltes Kunststoffmaterial K, die mit einer Preformmaschine M, z.B. zum Spritzgießen der Preforms P, über eine Verblockung 12 direkt verbunden ist. Die Verblockung 12 kann, vorzugsweise, zumindest ein Zwischenspeicher 20 für heißes recyceltes Kunststoffmaterial K, wie ein Silo oder dgl., sein.

Die Recyclingmaschine R weist als wesentliche Bestandteile wenigstens einen Reaktor, z.B. einen Dekontaminationsreaktor 1 und einen diesem nachgeschalteten oder damit kombinierten SSP-Reaktor 2, auf. Der Reaktor, z.B. der Dekontaminationsreaktor 1, wird über eine Dosiervorrichtung 3 (oder alternativ aus einer Vorrichtung zum Herstellen von Flakes) mit Kunststoffmaterial gespeist, das überwiegend aus Flakes, vorzugsweise PET-Flakes aus PET-Flaschen, besteht.

Das Kunststoffmaterial wird im Reaktor, z.B. im Dekontaminationsreaktor 1, einer Wärmebehandlung ausgesetzt, z.B. innerhalb eines Temperaturbereiches T1 zwischen 20°C bis 200°C, vorzugsweise innerhalb eines Temperaturbereiches um etwa 150°C, und über eine unter anderem von der Partikelgröße der Flakes abhängige Behandlungsdauer. Dem Reaktor kann dabei aus wenigstens einer Wärmequelle 4 Wärme zugeführt werden.

In dem SSP-Reaktor 2, falls vorgesehen, erfolgt eine Molekühlkettenlängenbeeinflussung des Kunststoffes in fester Phase (solid state polycondansation), wobei auch eine weitere Dekontamination stattfinden kann (Kombinationsreaktor). Dies erfolgt z.B. über eine vorbestimmte Prozessdauer in einem Temperaturbereich T2 von etwa 150°C bis 250°C, bevorzugt zwischen etwa 170°C und 210°C. Hierbei kann dem SSP-Reaktor 2 aus einer Wärmequelle 5 Wärme zugeführt werden. Der SSP-Prozess läuft bevorzugt in einer Schutzgasatmosphäre (Stickstoff oder Kohlendioxid) in Abwesenheit von Luftsauerstoff ab, gegebenenfalls unter Unterdruck.

Das recycelte Kunststoffmaterial K wird, durch einen Pfeil 6 angedeutet, in die Preformmaschine M mit einer Temperatur T3 überführt, die oberhalb einer Temperatur von etwa 65°C (Glasumwandlungspunkt des Kunststoffmaterials) und, vorzugsweise, bei etwa 180°C liegt, wobei diese Temperatur von einem Großteil der bei der Wärmebehandlung in der Recyclingmaschine R zugeführten Wärme stammt. Sofern ein SSP-Reaktor 2 vorgesehen ist, wird das recycelte Kunststoffmaterial K direkt aus dem SSP-Reaktor 2 in die Preformmaschine M überführt, und zwar durch eine Verblockung 12, die so ausgebildet ist, dass die Überführung und der Wärmetransfer zumindest im Wesentlichen in Abwesenheit von Luftsauerstoff stattfinden. Die Verblockung 12 kann als Zwischenspeicher 20 ausgebildet sein, z.B. als Silo, und kann eine Wärmeisolierung 13 aufweisen und, optional, sogar eine Wärmequelle 14 zur Zufuhr von Wärme, um die Temperatur T3 zumindest aufrechtzuerhalten oder sogar noch zu steigern. Im Kern sind die Recyclingmaschine R und die Preformmaschine zumindest funktionell, vorzugsweise sogar strukturell, untereinander verbunden bzw. verblockt.

Die Preformmaschine M weist z.B. zumindest einen Extruder 7 auf, der das Kunststoffmaterial K plastifiziert und in Spritzgießformen 8 einbringt, in denen die an einem Ausstoß 9 kontinuierlich abgegebenen Behälter-Preforms P hergestellt werden. Der Preformmaschine M ist gegebenenfalls mindestens eine weitere Wärmequelle 19 funktionell zugeordnet.

Die hergestellten Behälter-Preforms P können anschließend gespeichert und abgekühlt und an eine Blasmaschine übergeben werden. In der Ausführungsform in Fig. 1 ist jedoch die Anlage A zum Herstellen der Behälter-Preforms P aus recyceltem Kunststoffmaterial K direkt mit zumindest einer Blasmaschine B verblockt, um den Wärmegehalt der hergestellten Behälter-Preforms P möglichst weitgehend beim Blasformen (z.B. Streckblasen) nutzen zu können. Die Blasmaschine B besitzt beispielsweise einen Blasrotor mit nicht dargestellten Blasformen, in denen kontinuierlich die Behälter erzeugt werden, beispielsweise die PET-Flaschen F. Da zum Blasformen ein bestimmtes Temperaturprofil in jeder Behälter-Preform P benötigt wird, kann zwischen der Preformmaschine M und der Blasmaschine B eine Wärmebehandlungsstrecke 11 vorgesehen sein.

Als zwei weitere Optionen, die entweder separat oder in Kombination vorgesehen sind, ist zumindest eine Rückführeinrichtung 16 zwischen dem Ausstoß 9 der Preformmaschine M und/oder der Blasmaschine B vorgesehen, um fehlerhaften Preformausstoß (Aussonderungsvorrichtung 15) aus der Preformmaschine M und/oder Abfallmaterial und fehlerhaften Behälterausstoß (Absonderungseinrichtung 17) aus der Blasmaschine B jeweils in die Recyclingmaschine R zurückzuführen, und zwar entweder in die Dosier- oder Flakes-Herstelleinrichtung 3, oder über eine separate Zerkleinerungseinrichtung 18 direkt in den Dekontaminationsreaktor 1 (oder den SSP-Reaktor 2).

Die Recyclingmaschine R kann gleichzeitig mehrere Preformmaschinen M speisen. Um einen quasi kontinuierlichen Prozessablauf zu ermöglichen, können zumindest zwei Recyclingmaschinen R, R' (oder Reaktoren 1, 2) einer Preformmaschine M oder mehreren Preformmaschinen M, M', zugeordnet sein. Die Blasmaschine B braucht nicht notwendigerweise mit der Preformmaschine M verblockt zu sein. Die Recyclingmaschine R könnte auch nur einen Reaktor umfassen, der zur Dekontaminierung und für den SSP-Prozess verwendet wird.

In der Recyclingmaschine R herrschen vorzugsweise adiabate Prozessbedingungen. Die Wärmequellen 4, 5, 14, 19 können mit beliebigen Wärmeträgern betrieben werden (Wasser, Dampf, elektrisch, Thermalöl, oder dgl.). Als weitere Option, welche nicht Teil der Erfindung ist, könnte anstelle der festen Verblockung 12 zwischen der Recyclingmaschine R und der Preformmaschine M auch ein Wechselbehältersystem benutzt werden, beispielsweise derart, dass jeweils ein Wechselbehälter an der Recyclingmaschine R mit einer Charge gefüllt, dann verschlossen und zur Preformmaschine M überführt und dort angeschlossen wird, so dass mit zumindest zwei Wechselbehältern ein quasi kontinuierlicher Betriebsablauf ermöglicht wird. Diese Wechselbehälter können wärmeisoliert oder sogar beheizt sein.

## Patentansprüche

1. Anlage (A) zum Herstellen von Behälter-Preforms (P) aus recyceltem PET-Flakes-Kunststoffmaterial (K), mit wenigstens einer Preforms (P) bildenden, wenigstens einen mit dem PET-Flakes-Kunststoffmaterial (K) speisbaren Extruder (7) und Spritzgießformen (8) aufweisenden Preformmaschine (M), die aus wenigstens einer das recycelte PET-Flakes-Kunststoffmaterial (K) bereitstellenden Recyclingmaschine (R) mit dem recycelten PET-Flakes-Kunststoffmaterial (K) beschickbar ist, gespeist wird, **dadurch gekennzeichnet, dass** die Recyclingmaschine (R) zumindest einen Dekontaminationsreaktor (1) und/oder zumindest einen SSP-Reaktor (2) aufweist, dass der Dekontaminationsreaktor (1) und/oder der SSP-Reaktor (2) der Recyclingmaschine (R) und der Extruder (7) der Preformmaschine (M) direkt über eine Verblockung (12) miteinander verblockt sind, wobei die Verblockung (12) wärmeisoliert (13) und/oder zumindest im Wesentlichen sauerstofffrei ausgebildet ist, so dass von bei einer Wärmebehandlung des PET-Flakes-Kunststoffmaterials (K) in der Recyclingmaschine (R) eingebrachter Wärme zumindest ein Großteil mit dem PET-Flakes-Kunststoffmaterial (K) in die Preformmaschine (M) transferierbar ist, und dass die Preformmaschine (M) direkt mit einer Blasmaschine (B) verblockt ist.

2. Anlage nach Anspruch 1, **dadurch gekennzeichnet, dass** zwischen der Preformmaschine (M) und der Recyclingmaschine (R) eine Rückführeinrichtung (16) für fehlerhaften Preformausstoß vorgesehen ist.

3. Anlage nach Anspruch 1, **dadurch gekennzeichnet, dass** zwischen der Blasmaschine (B) und der Recyclingmaschine (R) eine Rückführeinrichtung (16) für Abfallmaterial und/oder fehlerbehafteten Behälterausstoß der Blasmaschine (B) vorgesehen ist.

4. Anlage nach Anspruch 1, **dadurch gekennzeichnet, dass** die Recyclingmaschine (R) zumindest einen kombinierten Dekontaminations- und SSP-Reaktor aufweist.

5. Anlage nach Anspruch 1, **dadurch gekennzeichnet, dass** an die Verblockung (12) eine Wärmezufuhr (14) angeschlossen ist.

## Claims

1. Device (A) for manufacturing container-preforms (P) from recycled PET-flakes-plastic material (K), comprising at least one preform machine (M) forming preforms (P), the preform machine (M) including at least one extruder (7) which can be supplied with the PET-flakes-plastic material (K) and injection molds (8), the preform machine (M) being supplied with the recycled PET-flakes-plastic material (K) by at least one recycling machine (R) providing the recycled PET-flakes-plastic material (K), **characterized in that** the recycling machine (R) comprises at least one decontamination reactor (1) and/or at least one SSP-reactor (2), that the decontamination reactor (1) and/or SSP-reactor (2) of the recycling machine (R) and the extruder (7) of the preform machine (M) are directly locked with each other by a blocking (12), the blocking (12) being heat insulated (13) and/or being designed at least substantially free of oxygen, such that of heat introduced during a heat treatment of the PET-flakes-plastic material (K) in the recycling machine (R) at least a major part can be transferred with the PET-flakes-plastic material (K) into the preform machine (M), and that the preform machine (M) is directly locked to a blowing machine (B).

2. Device according to claim 1, **characterized in that** a return assembly (16) for faulty preform output is provided between the preform machine (M) and the recycling machine (R).

3. Device according to claim 1, **characterized in that** a return assembly (16) for waste material and/or faulty container output of the blowing machine (B) is provided between the blowing machine (B) and the recycling machine (R).

4. Device according to claim 1, **characterized in that** the recycling machine (R) comprises at least one combined decontamination and SSB-reactor.

5. Device according to claim 1, **characterized in that** a heat supply (14) is connected with the blocking (12).

## Revendications

1. Installation (A) destinée à la fabrication de préformes (P) de récipients ou contenants à partir de matière plastique de flocons de PET (K) recyclée, comprenant au moins une machine à préformes (M) formant des préformes (P), qui comprend au moins une extrudeuse (7) pouvant être alimentée en matière plastique de flocons de PET (K) et des moules de moulage par injection (8), et qui est alimentée en matière plastique de flocons de PET (K) recyclée par au moins une machine de recyclage (R) fournissant et préparant la matière plastique de flocons de PET (K) recyclée,
**caractérisée**
**en ce que** la machine de recyclage (R) comprend au moins un réacteur de décontamination (1) et/ou au moins un réacteur SSP (de polycondensation en phase solide) (2), en ce que le réacteur de décontamination (1) et/ou le réacteur SSP (2) de la machine de recyclage (R) et l'extrudeuse (7) de la machine à préformes (M) sont interconnectés directement par l'intermédiaire d'un bloc d'interconnexion (12), le bloc d'interconnexion (12) étant isolé thermiquement (13) et/ou au moins réalisé exempt d'oxygène, de sorte qu'au moins une grande partie de la chaleur introduite lors d'un traitement thermique de la matière plastique de flocons de PET (K) dans la machine de recyclage (R), peut être transférée avec la matière plastique de flocons de PET (K) dans la machine à préformes (M), et en ce que la machine à préformes (M) est interconnectée directement à une machine de soufflage (B).

2. Installation selon la revendication 1, **caractérisée en ce qu'**entre la machine à préformes (M) et la machine de recyclage (R), il est prévu dispositif de retour de recyclage (16) pour des préformes produites, qui sont défectueuses.

3. Installation selon la revendication 1, **caractérisée en ce qu'**entre la machine de soufflage (B) et la machine de recyclage (R), il est prévu un dispositif de retour de recyclage (16) pour des déchets de matière et/ou des contenants produits de la machine de soufflage (B), qui sont défectueux.

4. Installation selon la revendication 1, **caractérisée en ce que** la machine de recyclage (R) comprend au moins un réacteur combiné de polycondensation en phase solide SSP et de décontamination.

5. Installation selon la revendication 1, **caractérisée en ce qu'**au bloc d'interconnexion (12) est raccordée une alimentation en chaleur (14).
